## Europäisches Patentamt

## European Patent Office

## Office européen des brevets

(19)

(11) **EP 1 217 830 A1**

(12) **EUROPÄISCHE PATENTANMELDUNG**

(43) Veröffentlichungstag:
**26.06.2002 Patentblatt 2002/26**

(51) Int Cl.[7]: **H04N 5/20**

(21) Anmeldenummer: **01129664.7**

(22) Anmeldetag: **13.12.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **22.12.2000 DE 10064678**

(71) Anmelder: **Kappa opto-electronics GmbH**
**37130 Gleichen (DE)**

(72) Erfinder:
- **Haese, Jürgen**
  **37130 Gleichen (DE)**
- **Weyh, Stephan**
  **37085 Göttingen (DE)**

(74) Vertreter: **Patentanwälte Rehberg + Hüppe**
**Postfach 31 62**
**37021 Göttingen (DE)**

(54) **Verfahren zur Signalverbesserung in einer mit einer digitalen Farbvideokamera aufgenommenen Bilderfolge**

(57) Ein Verfahren dient zur Signalverbesserung in einer mit einer digitalen Farbvideokamera aufgenommenen Bilderfolge, wobei die Videokamera originär ein digitales Videosignal (1) mit einem Helligkeitssignalanteil (3) und einem Farbsignalanteil (4) erzeugt. Das Verfahren weist die Schritte (6, 7) auf:

- fortlaufendes Auswerten des Helligkeitssignalanteils, um maximale Helligkeitswerte und minimale Helligkeitswerte zumindest innerhalb eines vorgegebenen Bildausschnitts zumindest für eine Teilfolge der Bilderfolge zu ermitteln;
- fortlaufendes Ermitteln von Offsetwerten auf der Basis von mindestens zwei zuvor ermittelten minimalen Helligkeitswerten,
- fortlaufendes Ermitteln von Verstärkungswerten auf der Basis von Differenzen von mindestens zwei zuvor ermittelten maximalen Helligkeitswerten zu den zugehörigen minimalen Helligkeitswerten,
- fortlaufendes Modifizieren des Helligkeitssignalanteils (3) durch Subtraktion des aktuellen Offsetwerts und durch Multiplikation mit dem aktuellen Verstärkungswert und fortlaufendes Modifizieren des Farbsignalanteils (4) durch Multiplikation mit dem aktuellen Verstärkungswert und einem vorgegebenen Gewichtungsfaktor zumindest für einen vorgegebenen Bildausschnitt.

Fig. 1

**Beschreibung**

Die Erfindung bezieht sich auf ein Verfahren zur Signalverbesserung in einer mit einer digitalen Farbvideokamera aufgenommenen Bilderfolge, wobei die Farbvideokamera originär ein digitales Videosignal mit einem Helligkeitssignalanteil und einem Farbsignalanteil erzeugt.

Es sind digitale Farbvideokameras bekannt, die originär ein digitales Videosignal mit einem Helligkeitssignalanteil und einem Farbsignalanteil erzeugen, welches dann noch am Ort der Videokamera in ein analoges Farbvideosignal umgewandelt wird, welches zur üblichen Videosignalübertragung und zur üblichen Darstellung der Bilderfolgen auf einem herkömmlichen TV-Farbmonitor geeignet ist.

Eine moderne digitale Farbvideokamera auf Basis der sogenannten CCD-Technik weist eine potentielle Auflösung im Helligkeitsbereich von typischerweise 8, 10 oder 12 Bit auf. Das heißt, es können 255, 1023 bzw. 4095 Helligkeitsabstufungen aufgezeichnet werden. Demgegenüber ist die Helligkeitsauflösung des menschlichen Auges stark begrenzt. Der Helligkeitsunterschied zweier benachbarter Bildelemente muß mindestens 1 bis 2 % betragen, um noch wahrgenommen zu werden. Eine Helligkeitsauflösung von mehr als 7 Bit, die 127 Helligkeitsabstufungen entspricht, bei der Darstellung von aufgenommenen Bildern bringt dementsprechend keine sichtbare Qualitätsverbesserung mehr.

Gleichzeitig weisen reale Bilder häufig keine Bildbereiche mit einer Helligkeit null und/oder einer maximal möglichen Helligkeit auf. Mit anderen Worten existieren häufig keine rein schwarzen und/oder weißen Bildbereiche.

Bei solchen Bildern ist es zur Kontrastanhebung bekannt, sie nachträglich einzeln einer digitalen Bildverarbeitung zu unterziehen. Hierzu muß ein in der Regel analog vorliegendes Farbvideosignal zuerst digitalilsiert werden. Dann wird ein maximaler Helligkeitswert und ein minimaler Helligkeitswert in dem jeweiligen Bild ermittelt. Hieraus werden ein Offsetwert und ein Verstärkungswert ermittelt. Anschließend werden die Bilddaten durch Abzug des Offsetwerts und durch Multiplikation mit dem Verstärkungswert so modifiziert, daß sie den Bereich der möglichen Helligkeitsabstufungen möglichst vollständig überspannen.

Diese bekannte digitale Bildverarbeitung, die als Software realisiert ist, ermöglicht es bei vertretbarem Hardwareaufwand nicht, die Kontrastanhebung bei einer digitalen Farbvideokamera aufgenommenen Bilderfolgen durchzuführen, die in Echtzeit auf einem Farbmonitor dargestellt werden sollen. Dies ist aber eine Anforderung, die vielfältig gestellt wird, beispielsweise bei Echtzeitobjektüberwachung oder bei der Überwachung endoskopischer Eingriffe in der Chirurgie.

Aus der DE 37 14 861 C2 ist ein Verfahren zur Signalverbesserung eines mit einer Videokamera aufgenommenen Bildsignals bekannt, bei dem ein minimaler und ein maximaler Helligkeitswert ermittelt wird. Zwischen dem ermittelten minimalen Helligkeitswert und dem maximalen Helligkeitswert wird ein Mittelwert gebildet, aus dem ein aktueller Offsetwert für das Videosignal abgeleitet wird. Weiterhin wird zwischen dem ermittelten minimalen Helligkeitswert und dem maximalen Helligkeitswert ein Differenzwert ermittelt, der als Verstärkungsbemessungsgröße für die Festlegung eines aktuellen Verstärkungswerts für das Videosignals verwendet wird.

Aus der US 4 933 750 ist eine Schwarzwertregelschaltung für eine Farbvideokamera bekannt, bei der der Schwarzwert über eine Verstärkungsregelung an das Videosignal angepasst wird.

Ein Verfahren zur Kontrastanhebung in einer mit einer S/W-Videokamera aufgenommenen Bilderfolge, bei dem ein analoges Videosignal am Kameraausgang durch eine Hardwareschaltung aufbereitet wird und als aufbereitetes analoges Videosignal ausgegeben wird, ist bekannt. Eine entsprechende Hardwarelösung wird von der Firma ADIMEC angeboten. Das bekannte Verfahren ist jedoch nicht für analoge Farbvideosignale geeignet und kann deshalb nicht sinnvoll mit einer Farbvideokamera angewendet werden.

Der Erfindung liegt die Aufgabe zugrunde, ein Verfahren zur Signalverbesserung in einer mit einer digitalen Farbvideokamera aufgenommenen Bilderfolge, wobei die Farbvideokamera originär ein digitales Videosignal mit einem Helligkeitssignalanteil und einem Farbsignalanteil erzeugt, aufzuzeigen, das in Echtzeit durchführbar ist und bei dem die erreichte Kontrastanhebung größer ist als bei den bekannte Verfahren aus dem Stand der Technik.

Erfindungsgemäß wird diese Aufgabe durch ein Verfahren der eingangs beschriebenen Art gelöst, das die Schritte aufweist:

- fortlaufendes Auswerten des Helligkeitssignalanteils, um maximale Helligkeitswerte und minimale Helligkeitswerte zumindest innerhalb eines vorgegebenen Bildausschnitts zumindest für eine Teilfolge der Bilderfolge zu ermitteln;

- fortlaufendes Ermitteln von Offsetwerten auf der Basis von mindestens zwei zuvor ermittelten minimalen Helligkeitswerten;

- fortlaufendes Ermitteln von Verstärkungswerten auf der Basis von Differenzen von mindestens zwei zuvor ermittelten Helligkeitswerten zu den zugehörigen minimalen Helligkeitswerte;

- fortlaufendes Modifizieren des Helligkeitssignalanteils durch Subtraktion des zuletzt ermittelten Offsetwerts und durch Multiplikation mit dem zuletzt ermittelten Verstärkungswert und fortlaufendes Modifizieren des Farbsignalanteils durch Multiplikation mit dem zuletzt ermittelten Verstärkungswert und einem vorgegebenen Gewichtungsfaktor zumindest für einen vorgegebenen Bildausschnitt.

Das neue Verfahren wird unmittelbar auf das originär von der digitalen Farbvideokamera erzeugte digitale Videosignal mit dem Helligkeitssignalanteil und dem Farbsignalanteil angewendet, d.h. bevor das digitale Videosignal ggf. in ein analoges Videosignal umgewandelt wird. Dieses digitale Videosignal wird bei bestimmten Kameratypen als YUV-Signal bezeichnet, wobei der Helligkeitssignalanteil der Y-Signalanteil ist und wobei der Farbsignalanteil der UV-Signalanteil ist, der auch als Farbdifferenzsignal bezeichnet wird. Dieses digitale Videosignal kann vor der Durchführung des neuen Verfahrens in der Farbvideokamera bereits einer Offsetwertsubtraktion und/oder einer Verstärkungswertmultiplikation mit grundsätzlich einstellbaren aber über die Bilderfolge hinweg konstanten Offset- und Verstärkungswerten unterzogen worden sein, wie es der Funktionsweise handelsüblicher Farbvideokameras entspricht. Für das neue Verfahren kommt es auf derartige vorgeschaltete Schritte jedoch nicht an. Sie können bei dem neuen Verfahren in üblicher Weise durchgeführt, aber auch gänzlich weggelassen werden.

Bei dem neuen Verfahren wird in jedem Fall eine dynamische Offsetwertsubstraktion und Verstärkungswertmultiplikation durchgeführt, wobei der Offsetwert und der Verstärkungswert fortlaufend neu berechnet werden. Die Berechnung des aktuellen Offsetwerts und des aktuellen Verstärkungswerts erfolgt in an sich bekannter Weise aus dem minimalen Helligkeitswert und dem maximalen Helligkeitswert, die innerhalb jeweils eines Bildes oder eines vorgegebenen Bildausschnitts ermittelt werden. Von der bekannten Bildverarbeitungssoftware unterscheidet sich das neue Verfahren jedoch dadurch, daß für die Ermittlung eines konkreten Offsetwerts nicht nur der maximale Helligkeitswert und der minimale Helligkeitswert nur eines Bildes bzw. Bildausschnitts berücksichtigt werden, sondern daß zumindest ein weiterer Satz zuvor ermittelter Helligkeitswerten Berücksichtigung findet. Hierdurch wird verhindert, daß die Offsetwerte und die Verstärkungswerte innerhalb der Bilderfolge im Sinne eines Helligkeitsflackerns springen. Diese Maßnahmen bedeuten auch, daß der Offsetwert und der Verstärkungswert, die zum Modifizieren eines bestimmten Bildes verwendet werden, zumindest teilweise anhand der Bilddaten von vorhergehenden Bildern berechnet wurden. Darüberhinaus kann bei dem neuen Verfahren zur Begrenzung seines Umfangs und zur Steigerung seiner Echtzeitfähigkeit ohne besonderen apparativen Aufwand das Auswerten des digitalen Videosignals und entsprechend das fortlaufende Ermitteln des Offsetwerts und des Verstärkungswerts auf eine Teilfolge der gesamten Bilderfolge beschränkt werden. Das heißt, das Auswerten erfolgt nicht für jedes Bild der Bilderfolge und entsprechend ändern sich auch der Offsetwert und der Verstärkungswert nicht mit jedem neuen Bild der Bilderfolge. Zudem müßten die einzelnen Bilder der Bilderfolge in der Regel verzögert werden, um sie mit den unmittelbar zugehörigen Offsetwert und Verstärkungswert zu modifizieren, weil diese dazu zunächst aus den Bildern selbst ermittelt werden müßten. Bei dem neuen Verfahren ist es daher bevorzugt, auf diese Verzögerung zu verzichten und vielmehr den jeweils zuletzt ermittelten Offsetwert und den zuletzt ermittelten Verstärkungswert für die Modifikation des aktuellen Bildes zu verwenden, auch wenn diese Werte streng genommen ausschließlich aus vorhergehenden Bildern ermittelt wurden. In der Praxis stellt sich aber heraus, daß die Offsetwerte und die Verstärkungswerte auch durch ihre Basis aus mindestens zwei Bildern nicht so stark schwanken, daß hierdurch sichtbare Nachteile bei der Darstellung der im Kontrast angehobenen Bilderfolgen zu beobachten wären. Vielmehr kann festgestellt werden, daß die mit dem neuen Verfahren bewirkte Kontrastanhebung äußerst wirksam ist. Die Unterscheidbarkeit einzelner Bildobjekte wird extrem verbessert, auch wenn diese in den nicht modifizierten Bilderfolgen mit dem menschlichen Auge nicht unterscheidbar sind. Dies gilt insbesondere dann, wenn die Bilderfolgen unter ungünstigen optischen Bedingungen mit der Farbvideokamera aufgezeichnet werden, beispielsweise bei Nebel im Außenbereich oder bei Dampfbildung innerhalb einer Körperhöhle. Für die hohe Effektivität der Kontrastanhebung bei dem neuen Verfahren ist es auch von Bedeutung, daß das neue Verfahren direkt auf das originär von der Videokamera erzeugte digitale Videosignal einwirkt, d. h. , daß vor der Durchführung des neuen Verfahrens kein Verlust an Helligkeitsinformation eingetreten ist, die bei der Kontrastanhebung ausgenutzt werden kann.

Bei dem Verfahren kann der Helligkeitssignalanteil vor dem Auswerten durch Mittelwertbildung über eine vorgegebene Anzahl benachbarter Bildpunkte geglättet werden. Es ist ein bekanntes Phänomen, daß digitale Videokameras sogenannte Defektpixel aufweisen, die immer eine konstante Helligkeit ausgeben, obwohl dies nicht den ihnen zugeordneten Bildinformationen entspricht. Um den Effekt dieser Defektpixel zu unterdrücken, reicht es aus, den Helligkeitssignalanteil durch Mittelwertbildung zu glätten. Damit wird gleichzeitig auch verhindert, daß aufgrund der natürlichen Streuung der in den einzelnen Bildpunkten registrierten Helligkeit ungewollte zeitliche Schwankungen der aus den ermittelten Helligkeitswerten abgeleiteten Offsetwerte und Verstärkungswerte auftreten. Bei einer seriellen Verarbeitung des Helligkeitssignalanteils hat es sich als besonders einfach herausgestellt, über eine Zahl von jeweils etwa zehn horizontal nebeneinanderliegenden Bildpunkten einen Mittelwert zu bilden, und die so ermittelten Mittelwerte anschließend als geglätteten Helligkeitssignalanteil weiter zu verarbeiten.

Beim fortlaufenden Auswerten des Helligkeitssignalanteils können die maximalen Helligkeitswerte und die minimalen Helligkeitswerte wahlweise innerhalb des vorgegebenen Bildausschnitts oder eines gesamten Halbbildes ermittelt werden. Der vorgegebene Bildausschnitt entspricht dabei einem Gebiet besonderen Interesses und wird vorzugsweise so gewählt, daß er frei von irgendwelchen kameraseitigen Einblendungen von Zusatzinformationen, Orientierungsmarken und dgl. ist, die die Durchführung des neuen Verfahrens beeinträchtigen können, wenn die Einblendungen schon in dem von dem neuen Verfahren bearbeiteten digitalen Videosignal enthalten sind.

Der vorgegebene Bildausschnitt, innerhalb dessen die maximalen Helligkeitswerte und die minimalen Helligkeitswerte ermittelt werden, und der vorgegebene Bildausschnitt, für den das digitale Videosignal modifiziert wird, können identisch sein. Es ist aber auch ohne weiteres denkbar, mit den innerhalb des vorgegebenen Bildausschnitts ermittelten Helligkeitswerten das gesamte digitale Videosignal oder das Videosignal für einen anderen vorgegebenen Bildausschnitt zu modifizieren. Die Abstimmung der beiden Bildausschnitte aufeinander ist nach den Besonderheiten des Einzelfalls zu optimieren. Dabei ist jeder bei dem neuen Verfahren vorgegebene Bildausschnitt vorzugsweise zumindest über einige Halbbilder hinweg fest, aber grundsätzlich frei wählbar.

Beim fortlaufenden Auswerten des Helligkeitssignalanteils hat es sich als vorteilhaft herausgestellt, den maximalen Helligkeitswert und den minimalen Helligkeitswert für jedes zweite Halbbild in den digitalen Videosignal zu ermitteln. Hierdurch wird die zu bearbeitende Datenmenge gegenüber der Berücksichtigung jedes Halbbildes bei der Auswertung halbiert. Gleichzeitig sind aber die Helligkeitswerte zeitlich noch so dicht, daß bei der Darstellung des modifizierten Videosignals keine Lücken oder Sprünge festgestellt werden können.

Konkret können bei dem neuen Verfahren die Offsetwerte auf der Basis von Differenzen der ermittelten minimalen Helligkeitswerte zu einem vorgegebenen Helligkeitswert ermittelt werden, der null Helligkeit entspricht. Im Ergebnis wird ein Bildpunkt mit dem minimalen Helligkeitswert in dem modifizierten Videosignal auf die Helligkeit null herabgesetzt.

Die Helligkeitswerte, die beim fortlaufenden Ermitteln der Offsetwerte und/oder der Verstärkungswerte die Basis bilden, können unterschiedlich stark gewichtet werden, wobei die Gewichtung der zuletzt ermittelten Helligkeitswerte am größten ist. Der aktuelle Offsetwert und der aktuelle Verstärkungswert können auch einfach der Mittelwert von aus den zuletzt ausgewerteten Halbbildern ermittelten Teilwerte sein. Bevorzugt ist es aber, die zeitlich weiter zurückliegend ermittelten Teilwerte geringer zu gewichten, so daß am stärksten die zuletzt ermittelten Teilwerte eingehen.

Die Verstärkungswerte können bei dem neuen Verfahren konkret auf der Basis von Quotienten eines vorgegebenen Differenzwerts, der einer maximalen Helligkeitsauflösung entspricht, und der Differenzen der zuvor ermittelten maximalen Helligkeitswerte zu den zugehörigen minimalen Helligkeitswerten ermittelt werden. Damit wird die tatsächliche Differenz in den Helligkeitswerten auf die maximale Helligkeitsauflösung gestreckt.

In der konkreten Anwendung des neuen Verfahrens können zumindest das Auswerten des Helligkeitssignalanteils, um die maximalen Helligkeitswerte und die minimalen Helligkeitswerte zu ermitteln, und das Modifizieren des Helligkeitssignalanteils und das Modifizieren des Farbsignalanteils durch Hardware realisiert werden. Diese Hardware umfaßt vorzugsweise ein programmierbares Logik-IC (EPLD). Die Ermittlung des aktuellen Offsetwerts und des aktuellen Verstärkungswerts erfolgt hingegen vorzugsweise durch einen Mikrocontroler, um noch Einstellungsmöglichkeiten offen zu lassen. Es ist aber auch möglich, diese Funktionen festeingestellt dem EPLD zuzuordnen.

Bei dem neuen Verfahren wird gegebenenfalls erst aus dem modifizierten digitalen Videosignal ein analoges Videosignal für die Darstellung der Bilderfolgen auf einem herkömmlichen TV-Monitor erzeugt.

Besonders vorteilhaft ist das neue Verfahren anwendbar, um mit der Farbvideokamera Bilderfolgen eines medizinischen Eingriffs in einer Körperhöhle aufzuzeichnen, die einem Operateur in Echtzeit auf einem Monitor dargestellt werden. Dabei wirkt das neue Verfahren als Optimierung der Kameraeinstellung statt als nachträgliche die Bilderfolge verfälschende Bildverarbeitung, der auf dem medizinischen Sektor grundsätzliche Vorbehalte entgegenstehen.

Die Erfindung wird im folgenden anhand eines Ausführungsbeispiels näher erläutert und beschrieben. Dabei zeigt

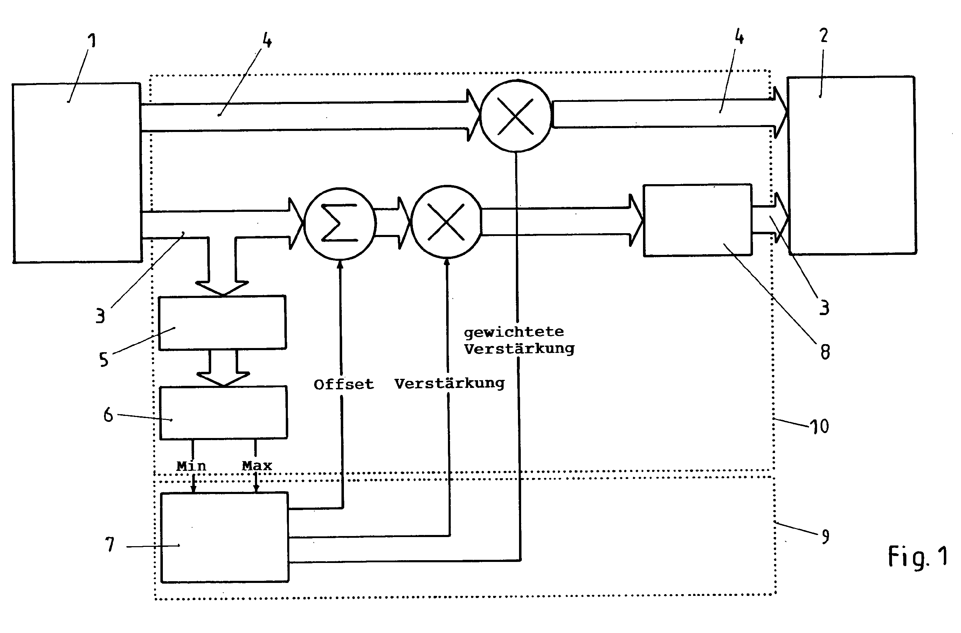

Fig. 1    ein Blockschaltbild zur Durchführung des neuen Verfahrens.

Das in Fig. 1 skizzierte neue Verfahren geht aus von einem digitalen Videosignal 1 und gibt ein modifiziertes digitales Videosignal 2 aus. Bei beiden digitalen Videosignalen 1 und 2 handelt es sich hier um YUV-Signale des Typs 4:2:2 gemäß dem Standard ITU-R BT.601/656. Diese digitalen Videosignale weisen einen Helligkeitssignalanteil 3 und einen Farbsignalanteil 4 auf. Der Helligkeitssignalanteil, d. h. hier der Y-Anteil, weist nach ITU-R BT.601 einen Wertebereich von 16 bis 254 auf, während der Farbsignalanteil, d. h. hier der UV-Anteil, der auch als Farbdifferenzsignal bezeichnet wird, einen Wertebereich von 16 bis 240 hat. Dieser letzte Wertebereich entspricht $128 \pm 112$, wobei der Wert 128 für einen unbunten Bildpunkt steht.

Der Helligkeitssignalanteil wird verzweigt, um einen auswertbare Zweig zu erhalten. An diesem Zweig wird in einem Schritt 5 eine Glättung durch Mittelwertbildung über jeweils acht horizontal aufeinanderfolgende Bildpunkte durchgeführt. Anschließend erfolgt in einem Schritt 6 für jedes zweite Halbbild die Ermittlung eines maximalen Helligkeitswerts und eines minimalen Helligkeitswerts entweder innerhalb des gesamten Bildes oder eines vorgegebenen Bildausschnitts. Diese Werte werden in einem Schritt 7 verwendet, um einen Offsetwert und einen Verstärkungswert zu ermitteln und fortlaufend zu aktualisieren. Dabei gilt für den Offsetwert:

$$\text{Offset}(i) = (100 - w)/100 * Y_{min}(i) + w/100 * Y_{min}(i-1),$$

wobei $Y_{min}(i)$ der minimale Helligkeitswert in dem Halbbild i ist. Der Verstärkungswert berechnet sich gemäß:

$$\text{Verstärkung} = (100 - w)/100 * 238/[Y_{max}(i)-Y_{min}(i)]$$
$$+ w/100 * 238/[Y_{max}(i-1) -Y_{min}(i-1)],$$

wobei $Y_{max}(i)$ der maximale Helligkeitswert in dem Halbbild ist. w ist ein einstellbarer Wichtungsfaktor, der festlegt, wie stark das vorletzte ausgewertete Halbbild in den aktuellen Offsetwert eingeht. Er liegt typischerweise bei 10 bis 50 %.

Mit den so ermittelten Offsetwerten und Verstärkungswerten wird der Helligkeitssignalanteil 3 modifiziert, indem zunächst der Offsetwert subtrahiert wird und anschließend eine Multiplikation mit dem Verstärkungswert erfolgt. Der Farbsignalanteil 4 wird nur mit der Verstärkung multipliziert, wobei diese durch einen einstellbaren Wichtungsfaktor n optimiert wird, der typischerweise zwischen 10 und 100 % liegt. Zusätzlich besteht hier die Möglichkeit einer Gamma-Korrektur 8 des modifizierten Helligkeitssignalanteils 3.

Bis auf den Schritt 7, der vorzugsweise direkt Integerzahlen für die Subtraktion des Offsets und die Multiplikation mit der Verstärkung ausgibt und der vorzugsweise von einem Mikrocontroler ausgeführt wird, werden alle anderen Schritte des Verfahrens vorzugsweise durch einen programmierten EPLD, d. h. durch eine digitale Hardware ausgeführt.

Das bis hierher beschriebene Verfahren bewirkt eine erhebliche Kontrastanhebung, insbesondere wenn es bei auf von einer digitalen Farbvideokamera aufgenommene Bilderfolgen angewendet wird, die beispielsweise aufgrund von Nebel oder Dampf vor den interessierenden Bildobjekten oder ungünstigen Beleuchtungsbedingungen einen sehr schlechten Ursprungskontrast aufweisen.

Nicht dargestellt ist in Fig. 1 die bei dem neuen Verfahren gegebene Möglichkeit, die Kontrastanhebung durch die Subtraktion des Offsets und die Multiplikation mit der Verstärkung auf einen vorgegebenen Ausschnitt zu beschränken. Dabei kann auch die Auswertung gemäß Schritt 6 beschränkt auf diesen Bildausschnitt durchgeführt werden.

## BEZUGSZEICHENLISTE

1 - digitales Videosignal

2 - modifiziertes digitales Videosignal
3 - Helligkeitssignalanteil
4 - Farbsignalanteil
5 - Schritt
6 - Schritt
7 - Schritt
8 - Gamma-Korrektur
9 - Mikroprozessor
10 - EPLD

## Patentansprüche

1. Verfahren zur Signalverbesserung in einer mit einer digitalen Farbvideokamera aufgenommenen Bilderfolge, wobei die Farbvideokamera originär ein digitales Videosignal (1) mit einem Helligkeitssignalanteil (3) und einem Farbsignalanteil (4) erzeugt, mit den Schritten (6, 7):

   - fortlaufendes Auswerten des Helligkeitssignalanteils (3), um maximale Helligkeitswerte und minimale Helligkeitswerte zumindest innerhalb eines vorgegebenen Bildausschnitts zumindest für eine Teilfolge der Bilderfolge zu ermitteln;
   - fortlaufendes Ermitteln von Offsetwerten auf der Basis von mindestens zwei zuvor ermittelten minimalen Helligkeitswerten;
   - fortlaufendes Ermitteln von Verstärkungswerten auf der Basis von Differenzen von mindestens zwei zuvor ermittelten maximalen Helligkeitswerten zu den zugehörigen minimalen Helligkeitswerten;
   - fortlaufendes Modifizieren des Helligkeitssignalanteils (3) durch Subtraktion des zuletzt ermittelten Offsetwerts und durch Multiplikation mit dem zuletzt ermittelten Verstärkungswert und fortlaufendes Modifizieren des Farbsignalanteils (4) durch Multiplikation mit dem zuletzt ermittelten Verstärkungswert und einem vorgegebenen Gewichtungsfaktor zumindest für einen vorgegebenen Bildausschnitt.

2. Verfahren nach Anspruch 1, **dadurch gekennzeichnet, daß** der Helligkeitssignalanteil (3) vor dem Auswerten durch Mittelwertbildung über eine vorgegebene Anzahl benachbarter Bildpunkte geglättet wird.

3. Verfahren nach Anspruch 1 oder 2, **dadurch gekennzeichnet, daß** beim fortlaufenden Auswerten des Helligkeitssignalanteils (3) die maximalen Helligkeitswerte und die minimalen Helligkeitswerte wahlweise innerhalb des Bildausschnitts oder des gesamten Halbbildes ermittelt werden.

4. Verfahren nach Anspruch 1, 2 oder 3, **dadurch ge-**

**kennzeichnet, daß** der vorgegebene Bildausschnitt, innerhalb dessen die maximalen Helligkeitswerte und die minimalen Helligkeitswerte ermittelt werden, und der vorgegebene Bildausschnitt, für den das digitale Videosignal (1) modifiziert wird, identisch sind.

5. Verfahren nach einem der Ansprüche 1 bis 4, **dadurch gekennzeichnet, daß** beim fortlaufenden Auswerten des Helligkeitssignalanteils (3) der maximale Helligkeitswert und der minimale Helligkeitswert für jedes zweite Halbbild ermittelt werden.

6. Verfahren nach einem der Ansprüche 1 bis 5, **dadurch gekennzeichnet, daß** die Offsetwerte auf der Basis von Differenzen der ermittelten minimalen Helligkeitswerte zu einem vorgegebenen Helligkeitswert ermittelt werden, der null Helligkeit entspricht.

7. Verfahren nach einem der Ansprüche 1 bis 6, **dadurch gekennzeichnet, daß** die Helligkeitswerte, die beim fortlaufenden Ermitteln der Offsetwerte und/oder der Verstärkungswerte die Basis bilden, unterschiedlich stark gewichtet werden.

8. Verfahren nach einem der Ansprüche 1 bis 7, **dadurch gekennzeichnet, daß** die Verstärkungswerte auf der Basis von Quotienten eines vorgegebenen Differenzwerts, der der einer maximalen Helligkeitsauflösung entspricht, und der Differenzen der zuvor ermittelten maximalen Helligkeitswerte zu den zugehörigen minimalen Helligkeitswerten ermittelt werden.

9. Verfahren nach einem der Ansprüche 1 bis 8, **dadurch gekennzeichnet, daß** zumindest das Auswerten des Helligkeitssignalanteils, um die maximalen Helligkeitswerte und die minimalen Helligkeitswerte zu ermitteln, und das Modifizieren des Helligkeitssignalanteils (3) und das Modifizieren des Farbsignalanteils (4) durch Hardware (10) realisiert werden.

10. Verfahren nach einem der Ansprüche 1 bis 9, **dadurch gekennzeichnet, daß** aus dem modifizierten digitalen Videosignal (2) ein analoges Videosignal für die Darstellung der Bilderfolgen auf einem Farbmonitor erzeugt wird.

11. Verfahren nach einem der Ansprüche 1 bis 10, **dadurch gekennzeichnet, daß** mit der Farbvideokamera Bilderfolgen eines medizinischen Eingriffs in einer Körperhöhle aufgezeichnet werden, die einem Operateur in Echtzeit auf einem Monitor dargestellt werden.

gewichtete
Verstärkung

Offset    Verstärkung

Min    Max

EP 1 217 830 A1

Fig. 1

**Europäisches Patentamt**

## EUROPÄISCHER RECHERCHENBERICHT

Nummer der Anmeldung

EP 01 12 9664

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | FR 2 648 302 A (AUTOMOBILES PEUGEOT ET AUTOMOBILES CITROEN) 14. Dezember 1990 (1990-12-14) * Seite 9, Zeile 1 - Seite 13, Zeile 11 * --- | 1,5,9 | H04N5/20 |
| A | EP 0 390 179 A (ZENITH ELECTRONICS CORPORATION) 3. Oktober 1990 (1990-10-03) * das ganze Dokument * --- | 1,2,9 | |
| A | EP 1 052 848 A (MINOLTA CO. LTD.) 15. November 2000 (2000-11-15) * Spalte 4, Zeile 30 - Spalte 6, Zeile 31 * --- | 1,9 | |
| A | US 4 187 519 A (VITOLS V. ET AL) 5. Februar 1980 (1980-02-05) * das ganze Dokument * --- | 1,9 | |
| A | US 5 870 154 A (CONOVER K. ET AL) 9. Februar 1999 (1999-02-09) * Spalte 5, Zeile 16 - Zeile 26 * * Spalte 10, Zeile 40 - Zeile 44 * ----- | 1,9 | |

**RECHERCHIERTE SACHGEBIETE (Int.Cl.7)**

H04N
G06T

Der vorliegende Recherchenbericht wurde für alle Patentansprüche erstellt

| Recherchenort | Abschlußdatum der Recherche | Prüfer |
|---|---|---|
| DEN HAAG | 25. Februar 2002 | Verschelden, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 01 12 9664

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2002

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| FR 2648302 | A | | 14-12-1990 | FR | 2648302 | A1 | 14-12-1990 |
| EP 0390179 | A | | 03-10-1990 | US | 4975773 | A | 04-12-1990 |
|  |  |  |  | EP | 0390179 | A1 | 03-10-1990 |
| EP 1052848 | A | | 15-11-2000 | JP | 2001028714 | A | 30-01-2001 |
|  |  |  |  | EP | 1052848 | A1 | 15-11-2000 |
| US 4187519 | A | | 05-02-1980 | KEINE | | | |
| US 5870154 | A | | 09-02-1999 | EP | 0885441 | A1 | 23-12-1998 |
|  |  |  |  | JP | 2000506284 | T | 23-05-2000 |
|  |  |  |  | WO | 9733271 | A1 | 12-09-1997 |

EPO FORM P0461

Für nähere Einzelheiten zu diesem Anhang : siehe Amtsblatt des Europäischen Patentamts, Nr.12/82